Europäisches Patentamt

European Patent Office

Office européen des brevets

(19)

(11)  **EP 0 628 519 B1**

(12)  **EUROPÄISCHE PATENTSCHRIFT**

(45) Veröffentlichungstag und Bekanntmachung des Hinweises auf die Patenterteilung:
**15.04.1998  Patentblatt 1998/16**

(51) Int. Cl.$^6$: **C02F 9/00**,  C02F 1/58

(21) Anmeldenummer: **94101101.7**

(22) Anmeldetag: **26.01.1994**

(54) **Verfahren zur Reinigung von alkalischem Prozesskondensat-Abwasser**

Process for purifying alcaline process-condensate wastewater

Procédé pour la purification de l'eau alcaline provenant de procédés de condensation

(84) Benannte Vertragsstaaten:
**DE ES GB IT SE**

(30) Priorität: **04.06.1993 DE 4318549**

(43) Veröffentlichungstag der Anmeldung:
**14.12.1994  Patentblatt 1994/50**

(73) Patentinhaber: **Krupp Uhde GmbH**
**44141 Dortmund (DE)**

(72) Erfinder:
• **Jass, Karl-Heinz**
**D-44534 Lünen (DE)**

• **Liu, Ci**
**D-44809 Bochum (DE)**
• **Brandl, Adrian**
**D-58239 Schwerte (DE)**

(74) Vertreter:
**Patentanwälte**
**Meinke, Dabringhaus und Partner**
**Westenhellweg 67**
**44137 Dortmund (DE)**

(56) Entgegenhaltungen:
DE-A- 2 709 231          DE-A- 2 744 437
DE-A- 3 714 016          FR-A- 2 235 881
US-A- 3 984 316          US-A- 5 035 807

Anmerkung:    Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung richtet sich auf ein Verfahren zur Reinigung von alkalischem Prozeßkondensat-Abwasser der im Oberbegriff des ersten Anspruches angegebenen Gattung.

Bei der partiellen Oxidation von kohlenstoffhaltigen Brennstoffen entsteht ein rohes Prozeßgas. Das bei dieser heterogenen Vergasung erzeugte rohe Prozeßgas wird in mehreren, an die Vergasung anschließenden Verfahrensschritten gereinigt und konditioniert.

Ein spezieller partieller Oxidationsprozeß ist beispielsweise die Hochtemperatur-Winkler-Vergasung, bei der aus festen Brennstoffen, wie z.B. Torf, Braunkohle, Steinkohle oder ähnlichem, rohes Prozeßgas erzeugt wird. Bei Einsatz von Braunkohle besteht das gebildete rohe Prozeßgas vorwiegend, d.h. zu ca. 80 %, aus CO und $H_2$, die restlichen Bestandteile sind $CO_2$, $CH_4$, Dampf, $NH_3$ und Schwefelverbindungen. Ammoniak $NH_3$ entsteht in der reduzierenden Atmosphäre der heterogenen Vergasung aus den mit dem festen Brennstoff eingebrachten Aminen. Die Vergasung geschieht unter Druck, beispielsweise bei 25 bar.

Das rohe Prozeßgas wird nach seiner Reinigung und Konditionierung entweder als Chemie-Rohstoff oder als gasförmiger Brennstoff in Kraftwerksgasturbinen genutzt.

Zwecks Reinigung und Konditionierung wird Prozeßrohgas in mehreren, prozeßgasseitig in Serie geschalteten Verfahrensschritten behandelt.

Im ersten Schritt wird Prozeßrohgas in einer Rohgaswäsche mittels Wasser vom aus der Vergasung herrührenden Staub befreit. Es entsteht gewaschenes Prozeßgas.

Im zweiten Schritt wird das gewaschene Prozeßgas in einer Prozeßgaskühlung abgekühlt und als gekühltes Prozeßgas abgegeben. Das im zweiten Schritt durch Abkühlung des im Prozeßgas enthaltenen Dampfes entstehende Prozeßkondensat wird vom Prozeßgas abgetrennt und aus dem Prozeßgasstrom ausgeschleust. Im ausgeschleusten Prozeßkondensat sind aus dem Prozeßgas stammende Stoffe gelöst. Diese gelösten Gase sind im wesentlichen Kohlendioxid $CO_2$, Ammoniak $NH_3$, Schwefelwasserstoff $H_2S$ und Blausäure HCN, als Spuren können Benzol oder andere Kohlenwasserstoffverbindungen anwesend sein.

Von diesen Gasen wirken Kohlendioxid $CO_2$, Schwefelwassserstoff $H_2S$ und Blausäure HCN auf Wasser jedes für sich azidisch, d.h. das jeweilige Gas säuert Wasser an, wenn es darin in Lösung geht und teilweise dissoziiert. Ammoniak hingegen wirkt basisch auf Wasser, wenn es darin in Lösung geht und teilweise dissoziiert.

Die gelösten Gase ($CO_2$, $NH_3$, $H_2S$, HCN) reagieren miteinander in dem eine wässrige Lösung darstellenden Prozeßkondensat und liegen weitgehend in ionischer Form vor. Die Reaktionen laufen beispielsweise nach folgenden Gleichungen ab:

$$NH_3 + H_2O \Leftrightarrow NH_4 + OH^- \hspace{4cm} A)$$

$$CO_2 + H_2O \Leftrightarrow HCO_3^- + H^+ \hspace{4cm} B)$$

$$H_2S + OH^- \Leftrightarrow HS^- + H_2O \hspace{4cm} C)$$

$$HCN + OH^- \Leftrightarrow CN^- + H_2O \hspace{4cm} D)$$

In der reagierten, im Gleichgewicht vorliegenden Lösung kommen draufhin folgende Ionen vor: $NH_4^+$; $HCO_3^-$; $HS^-$, $OH^-$, $H^+$ und $CN^-$. Diese Lösung liegt leicht alkalisch bei einem pH-Wert von 9,0 bis 9,5 vor.

In einem dritten Schritt wird aus dem gekühlten Prozeßgas in einer Entschwefelung der Schwefelwasserstoff $H_2S$ entfernt. Aus der Entschwefelung wird entschwefeltes Prozeßgas abgegeben, der gewonnene Schwefelwasserstoff wird in einer Schwefelgewinnung zu elementarem Schwefel umgesetzt. Bei dieser Umsetzung in elementaren Schwefel fällt ein Prozeßabwasserstrom an, der gelösten Schwefelwasserstoff $H_2S$ mit sich führt. Der Prozeßabwasserstrom wird mit dem aus dem zweiten Schritt stammenden Prozeßkondensatstrom zugesammengeführt und gemischt.

Im vierten Schritt wird das entschwefelte Prozeßgas in einer Reingasbefeuchtung mit Wasserdampf angereichert und als Prozeßreingas abgegeben. Ein Teil des in der Reingasbefeuchtung eingesetzten Befeuchtungswassers fällt als Abschlämmwasser an. Der Abschlämmwasserstrom wird mit dem aus dem zweiten Schritt stammenden Prozeßkondensatstrom und dem aus dem dritten Schritt stammenden Prozeßabwasserstrom zusammengeführt und gemischt.

Das aus Mischung dieser drei Ströme entstandene Prozeßkondensatabwasser ist eine reagierte, im Gleichgewicht befindliche Lösung. Sie enthält die Ionen: $NH_4^+$; $HCO_3^-$; $HS^-$, $OH^-$, $H^+$ und $CN^-$ und liegt auch nach der Mischung der drei Ströme leicht alkalisch bei einem pH-Wert von 9,0 bis 9,5 vor.

Das Prozeßkondensatabwasser wird auf etwa Vergasungsdruckniveau gebildet. Deshalb geht eine - verglichen mit der Gaslöslichkeit bei Umgebungsdruck - wesentlich höhere Gasmenge im Prozeßkondensatabwasser physikalisch in Lösung. Die in molekularer Form in Lösung gegangenen Gase dissoziieren anschließend im Prozeßkondensatabwasser teilweise in ionischer Form.

Die gebildeten positiven und negativen Ionen bilden ein miteinander reagierendes chemisches Gleichgewichtssystem, das von dem auf physikalischen Löslichkeiten beruhenden Stofftransportsystem gespeist wird.

Die in das chemische Gleichgewichtssystem eingespeisten Gasmengen werden dort chemisch gebunden. Sie sind, anders als die in molekularer Form in Lösung gegangenen sogenannten "freien" Gasmengen, dem auf physikalischer Löslichkeit beruhenden Gleichgewichtssystem entzogen. Das Prozeßkondensatabwasser enthält also die freien und die gebundenen Gasmengen. Dieser Gasgehalt ist größer als der Gasgehalt, der sich bei ausschließlich physikalisch wirkenden Löslichkeiten einstellen würde.

Die gebundenen Gasmengen lassen sich zwar mit allein die physikalischen Löslichkeiten beeinflussenden Mitteln aus dem Prozeßkondensatabwasser entfernen, dabei werden aber alle Komponenten mit den Brüden ausgetrieben.

Derartige, mit freien und gebundenen gelösten Gasen beladene Prozeßkondensatabwässer können nun nicht ohne weiteres in die Umgebung abgegeben werden. Zum einen stellt Prozeßkondensat einen von Mineralsalz befreiten Wasserstrom dar, der aus Kostengründen wiederverwendet werden soll, zum anderen kann mit den genannten Gasen beladenes alkalisches Prozeßkondensatabwasser nicht unmittelbar in ein Kanalisationsnetz geleitet werden, weil es aus Beton gefertige Kanalisationsbauteile zerstört. Außerdem kann Prozeßkondensatabwasser nicht unmittelbar in die Umgebung abgegeben werden, weil es toxische Bestandteile gelöst enthält, z.B. die Blausäure HCN. Weiterhin stellen die im Prozeßkondensatabwasser enthaltenen Gase potentielle Wertstoffe dar, wenn sie getrennt zurückgewonnen werden.

Für die reinigende Behandlung von Abwässern oder Prozeßkondensatabwässern, in denen leicht flüchtige Stoffe gelöst sind, wie die genannten Gase, oder auch minder flüchtige organische Verbindungen, wie Mercaptane, Phenole, Ketone, Aldehyde und auch aliphatische Karbonsäuren (Fettsäuren), sind Verfahren bekannt.

Diese Verfahren sind darauf hin ausgerichtet, das beladene Wasser in einer Kolonne oben aufzugeben und mittels im Gegenstrom zum Wasser geführten Gasen bzw. Dämpfen auszublasen, d.h. die Beladung abzutreiben.

Dieses Verfahren wird auch als "Strippen" bezeichnet, die entsprechende Kolonne wird dann auch "Stripper" oder Abstreifturm genannt.

In der deutschen Offenlegungsschrift DE-35 33 799 wird ein Verfahren zur Entfernung der flüchtigen Inhaltsstoffe Ammoniak $NH_3$, Schwefelwasserstoff $H_2S$ und Blausäure HCN aus Wässern von Kokereianlagen beschrieben, wobei der Kohlendioxidgehalt der Wässer nicht genannt wird.

Bei dem Verfahren werden die Wässer mit einem inerten Strippgas in einem Abstreifturm behandelt. Als inertes Strippgas wird das Abgas aus einer Ammoniakspaltanlage zusammen mit dem Abgas einer Claus-Anlage eingesetzt.

Der Ablauf aus dem Abstreifturm weist einen Gehalt an freiem Ammoniak von Null auf, weil das nicht mit dem Strippgas entfernte Ammoniak durch das aus der Claus-Anlage eingebrachte Schwefeldioxid als Ammoniumsulfit gebunden wird. Die Salzfracht aus Ammoniumsulfit im Ablauf ist nachteilig, weil sie eine zu vermeidende Umweltbelastung darstellt.

In der deutschen Patentschrift DE-22 29 213 wird ein Verfahren beschrieben, bei dem die bei der Entgasung oder Vergasung von Kohlen anfallenden Abwässer von den in ihnen verbliebenen Lösungsmittelresten und den in ihnen enthaltenen Mengen von Kohlendioxid $CO_2$, Schwefelwasserstoff $H_2S$ und Ammoniak $NH_3$ mittels Strippdampf aufgearbeitet werden. Nachteilig ist, daß ein beachtlicher Teil des eingesetzten Strippdampfes zusammen mit den abgetriebenen Gasen nach außen abgegeben wird und durch frisch zugeführtes Kesselspeisewasser ersetzt werden muß.

In der deutschen Patentschrift DE-902 368 ist ein Verfahren zur Aufarbeitung phenolhaltiger Abwässer, die bei der Vergasung oder Entgasung von Kohlen anfallen und in denen Kohlendioxid $CO_2$, Schwefelwasserstoff $H_2S$ und Ammoniak $NH_3$ gelöst sind, beschrieben, in welchem nach der Extraktion der organischen Verbindungen im extrahierten Wasser verbliebenen Lösungsmittelreste zusammen mit Kohlendioxid und Schwefelwasserstoff in einer Kolonne mittels Wasserdampf abgetrieben werden. Das Kopfprodukt dieser Kolonne wird mit dem der Kolonne zuströmenden kalten extrahierten Wasser, vorzugsweise einem Teilstrom desselben, berieselt und direkt gekühlt, wobei die Dämpfe des restlichen Lösungsmittels niedergeschlagen werden und in einem Abscheider als Flüssigkeitssicht von der wässrigen Phase abgetrennt werden, während $CO_2$ und $H_2S$ als Kopfprodukt entweichen. Infolge der Azidität des als direktes Kühlmittel verwendeten extrahierten Wassers wird in diesem als Entsäuerung bezeichneten Schritt kein Ammoniak abgetrennt. Es befindet sich in dem aus der Entsäuerungskolonne als Sumpfprodukt abgeleiteten Wasser und kann aus diesem durch Abtreiben mit Wasserdampf in einer weiteren Kolonne entfernt werden.

In dem aus der deutschen Patentschrift DE-936 331 bekannten Verfahren werden die in einer solchen Kolonne abgetriebenen ammoniakhaltigen Dämpfe in einem Sättiger mit Schwefelsäure gewaschen, wobei das Ammoniak als Ammoniumsulfat gebunden und schließlich zur Kristallisation gebracht wird. Der Schwefelsäurebedarf dieses Sättigers kann teilweise aus dem Abgas der vorausgehenden Entsäuerungsstufe gewonnen werden, indem dieses verbrannt wird und das dabei gebildete $SO_2$ in dem als "Naßkatalyse" bekannten Verfahren zu Schwefelsäure umgewandelt wird.

Das nach dem Abtreiben des Ammoniaks verbleibende Abwasser kann in eine übliche Abwasserbehandlung mit einer biologischen und einer mechanischen Stufe oder in vielen Fällen auch direkt in einen Flußlauf abgegeben werden. Nachteilig bei dieser Verfahrensweise ist, daß Schwefelsäure verbraucht wird und als fester Rückstand Ammoniumsulfat anfällt, der zu deponieren ist.

Aus der deutschen Patentschrift DE-27 44 437 ist ein Verfahren bekannt, mit dem bei der Entgasung oder Vergasung von Kohlen anfallende Abwässer, die auch organische Verunreinigungen enthalten, aufgearbeitet werden. Dazu werden die Abwässer mit einem organischen Lösungsmittel, das in Wasser nicht oder nur in geringen Mengen löslich ist, extrahiert. Der Extrakt wird zu Rohphenol und frischem Lösungsmittel aufgearbeitet.

Im extrahierten Abwasser sind auch noch organische Lösungsmittelreste enthalten. Dieses Abwasser wird direkt in eine Druckentsäuerungskolonne eingespeist.

Die organischen Lösungsmittelreste aus dem extrahierten Abwasser reichern sich im oberen Teil der Druckentsäuerungskolonne an. Sie werden als Seitenabzug ausgeschleust.

Die im Abwasser noch enthaltenen alkalischen und sauren Bestandteile werden dadurch voneinander sauber getrennt aus dem Abwasser entfernt, daß man:

- einen Teil des Kopfproduktes der Abtreibekolonne nicht kondensiert und die Dämpfe in eine Waschkolonne überführt und hier Wasser, geringe Mengen Ammoniak und die gesamten sauren Gase im oberen Teil dieser Waschkolonne stufenweise kondensiert und reines Ammoniak über Kopf abzieht;
- das die gesamten sauren Gase enthaltende Kondensat vom oberen Teil der Waschkolonne abzieht, in einen separaten Aufkocher überführt und erhitzt;
- auf den Kopf der Waschkolonne eine kleine Menge kaltes Wasser aufgibt und das Sumpfprodukt der Waschkolonne abzieht und in eine Druckentsäuerungskolonne überführt und hier unter Druck die sauren Gase $H_2S$ und $CO_2$ über Kopf abzieht und das aus einer ammoniakreichen Lösung bestehende Sumpfprodukt der Druckentsäuerungskolonne in die Abtreibekolonne zurückführt.

Nachteilig an diesem Verfahren ist der Wasserverbrauch, der die Abwassermenge vergrößert. Das Wasser wird sowohl am Kopf der Waschkolonne als auch am Kopf der Druckentsäuerungskolonne eingespeist und erhöht die Abwassermenge um mehr als 10 %.

Aus der US-A-3 984 316 ist ein Verfahren zur Reinigung von Abwässern bekannt, die Ammoniak und Schwefelwasserstoff enthalten, wobei der Abwasserstrom mit einem $CO_2$-enthaltenden Strippgas in Kontakt gebracht wird, so daß der Reinigungsstufe $NH_3$-haltiges Wasser entnommen wird. Bei dem dort offenbarten Verfahren besitzt das $CO_2$ den Status eines Inertgases und ist dort als Substanz von nur geringerem Wert angegeben und wird mit anderen Komponenten als Brenngas eingesetzt.

Zum technischen Umfeld, insbesondere zum Problem Sauergas/Sauerwasser, sei noch auf folgende Literaturstellen ohne Anspruch auf Vollständigkeit hingewiesen: DE-C-30 30 959, DD-A-268 927, US-3 821 110, US-4 486 299, US-4 746 438, Zeitschrift "Plant/Operations Progress" (Vol. 2, No. 2), April 1983, S. 108 ff., Zeitschrift "Environmental Progress" (Vol. 3, No. 4), November 1984, S. 217 ff., Zeitschrift "Chemical Engineering Progress" (Vol. 71, No. 6), Juni 1975, S. 78 ff., Buch "Energy Environ" (N.Y., Conf.: 6, USA (1979)), Mai/21, S. 285 ff., sowie Zeitschrift "Kohlevergasung Vortrag VGB-Konferenz 1991, Dr. Groß u.a., "Gas- und Abwasserbehandlung für GuD-Kraftwerke mit Kohlevergasung".

Aufgabe der Erfindung ist die Schaffung einer Lösung, mit der Prozeßkondensat-Abwasser, von physikalisch und chemisch gebundenen Komponenten mit einfachen Mitteln gereinigt werden kann, wobei eine ggf. notwendige oder gewünschte Nachbehandlung des die Reinigung verlassenden Abwassers in einfacher Weise möglich gemacht wird.

Mit einem Verfahren der eingangs bezeichneten Art wird diese Aufgabe gemäß der Erfindung dadurch gelöst, daß der Abwasserstrom mit einem Strippgas angesäuert wird, dessen Hauptbestandteil $CO_2$ darstellt und anschließend mittels eines Dampfstromes derart beaufschlagt wird, daß dieser Reinigungsstufe ammoniak($NH_3$)-haltiges, bis auf Spuren salzbildnerfreies Wasser entnommen wird, wobei das diese Reinigungsstufe verlassende, noch $NH_3$ enthaltende Sauergas einer weiteren Behandlung zugeführt wird.

Ein Vorteil des erfindungsgemäßen Verfahrens ist darin zu sehen, daß im Stripperablauf praktisch kein Salzbildner, sondern lediglich freies Ammoniak ($NH_3$) gelöst enthalten ist. Dieses läßt sich einfach und wirtschaftlich dann in der nachgeschalteten Ammoniakabtrennung daraus entfernen, beispielsweise durch Abtreiben mit Dampf. Damit wird ein den Umweltanforderungen genügendes Abwasser abgegeben, das weder Salzfracht noch toxische Bestandteile im unzulässigen Maße gelöst enthält.

In der im Voranstehenden bereits genannten deutschen Patentschrift DE-22 29 213 ist in Spalte 2, Zeilen 58 ff., die Entstehung von Kristallablagerungen von Ammoniumkarbonat angesprochen. Demnach kann sich an kalten Stellen der Apparatur, z.B. im Kondensator sowie in dessen Zu- und Ableitungen, festes Ammoniumkarbonat niederschlagen. Aus den Brüden scheiden sich auch Carbamate ab, die sich durch Desublimation an ausreichend kalten Stellen niederschlagen, was ebenfalls zu Verstopfungen führt, wenn die Apparatur mit feuchten Brüden, die sowohl Kohlendioxid $CO_2$ als auch Ammoniak $NH_3$ mit sich führen, beaufschlagt wird.

Weitere Merkmale, Einzelheiten und Vorteile der Erfindung ergeben sich aus den Unteransprüchen.

Mit einer Ausgestaltung der Erfindung läßt sich die Gesamtverfahrensweise in hohem Maße optimieren, wobei diese Ausgestaltung darin besteht, daß das $CO_2$-haltige Gas einer Entschwefelungsstufe entnommen wird.

Ein aus einer partiellen Oxidation von kohlenstoffhaltigen Brennstoffen gewonnenes Gas wird in einer Entschwefelungsstufe entschwefelt. Dies geschieht z.B. durch Waschen mit N-Methyl-Pyrroliodon (NMP). Mit dieser Wäsche wird dem sauren Prozeßgas $CO_2$ und $H_2S$ entzogen, wobei in einer Waschlaugenregenerationsstufe $CO_2$ anfällt. Dieses Wertgas wird regelmäßig in das Prozeßgas zurückgeführt, erfindungsgemäß wird aber ein Teil für die Reinigung des Abwassers eingesetzt.

Zweckmäßig wird als Strippgas ein Gas von über 50 Vol.-% $CO_2$ eingesetzt. Grundsätzlich wäre es möglich, den Strippgas-Bedarf mit synthetisiertem Strippgas zu decken, etwa in Form eines Gasgemisches aus $CO_2$ und $N_2$, wobei der $N_2$-Anteil entsprechend hoch gewählt werden kann, um möglichst wenig vom Wertgas $CO_2$ einsetzen zu müssen.

Vorteilhaft wird das Sauergas aus der ersten Reinigungsstufe in einem wasserbeaufschlagten Quenchkühler weiterbehandelt, wobei das dort eingesetzte Wasser im Kreislauf geführt wird und ihm die beim Quenchen aufgenommene Quenchwärme im Kreislauf durch indirekte Kühlung wieder entzogen wird. Im Quenchkühler entsteht durch Niederschlagung eines Teils der im Sauergas enthaltenen Komponenten z.B. des Wasserdampfes, des Ammoniaks usw. ein Abfluß, der vom im Kreislauf geführten Wasser abgetrennt wird. Der Abfluß wird dann der ersten Reinigungsstufe wieder zugeführt.

Durch diese erfindungsgemäße Verfahrensweise ist es möglich, eine Kühlung des Sauergases, ohne daß es dazu trockene Oberflächen berühren muß, zu ermöglichen, so daß es nicht zu Ablagerungen kommen kann. Dabei wird zweckmäßig die Temperatur im Quenchkühler in einer Höhe eingeregelt, daß es nicht zur Karbonat-Bildung kommt.

In einer weiteren Ausgestaltung des Verfahrens ist vorgesehen, daß die den Quenchkühler verlassenden Brüden einem Rest-Wäscher zugeführt werden, wobei das diesen Wäscher verlassende Waschwasser dem Prozeßwaschwasserstrom zugeführt wird, und wobei das diesen Rest-Wäscher verlassende Sauergas dem Prozeßgasstrom hinter der Prozeßgaskühlung vor der Entschwefelung zugeführt wird.

Als ein bereits im Voranstehenden mitgeteiltes Merkmal der Erfindung wird der Quenchkühlerablauf in die erste Reinigungsstufe vor den Abstreifturm zurückgeführt und dem Prozeßkondensatabwasserstrom beigemischt. Diese Rückführung ist vorteilhaft, weil damit der überwiegende Teil des im Stripperbrüden enthaltenen Ammoniaks $NH_3$ zusammen mit dem Wasserdampf des Stripperbrüdens erneut dem Wärme- und Stoffaustausch im Abstreifturm unterzogen wird und schlußendlich mit dem Stripperablauf aus dem derart gebildeten Ammoniak/Wasserkreislauf ausgeschleust wird.

Ein weiterer Vorteil des Verfahrens besteht darin, daß das Strippgas in den Prozeßrohgasstrom zurückgeführt wird und als Wertstoff nicht verlorengeht. Dies ist besonders dann von Bedeutung, wenn das Prozeßgas als Brennstoff in Kraftwerksgasturbinen genutzt wird. Der Energieinhalt des die Gasturbine beaufschlagenden, aus der Verbrennung des Brennstoffes stammenden Rauchgases wächst mit zunehmendem Molekulargewicht des Rauchgases. Da das Rauchgas im wesentlichen aus den Verbrennungsprodukten Wasserdampf $H_2O$ und Kohlendioxid $CO_2$ gebildet wird und das Molekulargewicht des Kohlendioxids $CO_2$ von 44 kg/kmol dasjenige von Wasserdampf $H_2O$ von 18 kg/kmol übersteigt, bewirkt jede Vergrößerung des Kohlendioxidanteils im Rauchgas eine entsprechende Zunahme des Rauchgasenergieinhalts. Deshalb ist in diesem Zusammenhang das Kohlendioxid zunächst als Wertstoff und nicht als Abgas zu betrachten.

Überraschenderweise wird auch der mit dem Prozeßkondensat, mit dem Prozeßabwasser und mit dem Abschlämmwasser dem Prozeßgas entzogene Anteil des Werstoffes $CO_2$ wieder in den Prozeßrohgasstrom zurückgeführt, wird also nicht als Abgasstrom in die Umgebung abgegeben, sondern kann energetisch wirksam genutzt werden.

Ein weiterer Vorteil des erfindungsgemäßen Verfahrens stellt sich dadurch ein, daß der aus dem Prozeßrohgasstrom ausgeschleuste Schwefelwasserstoff $H_2S$, der sowohl im Prozeßkondensat, im Prozeßabwasser als auch im Strippgas anteilig enthalten ist, als Komponente des Sauergases in den Prozeßgasstrom vor die Entschwefelung zurückgeführt wird und sukzessive in der Schwefelgewinnung in den Wertstoff Schwefel überführt wird. Diese vor bzw. in der Entschwefelung aus dem Prozeßgas ausgeschleusten Schwefelwasserstoffteilströme gehen also nicht verloren, sondern werden in die Schwefelwertstoffgewinnung einbezogen.

Wie weiter oben schon ausgeführt wurde, werden weitere Behandlungsstufen des Abwassers in einfacher Weise möglich, da dieses zwar Ammoniak enthält, aber praktisch salzbildnerfrei ist.

Eine entsprechende Anlage mit einer Rohgaszuführung zu einer Rohgaswäsche sowie mit einer Prozeßgaskühlung, einer Entschwefelungsstufe und einer Reingasbefeuchtungsstufe zeichnet sich dadurch aus, daß zur Behandlung des Abwassers ein Abstreifturm mit einer Strippgas-Zuführung, mit einer Abtriebszone, mit einer dampfbeaufschlagten Aufwärmzone sowie mit einer Sumpfzone zum Abzug von ammoniakhaltigem, im wesentlichen salzbildnerfreien Wasser und mit einem Dampfdom zum Abzug der Stripperbrüden vorgesehen ist.

Die Erfindung ist nachstehend anhand der Zeichnung beispielsweise näher erläutert. Diese zeigt in

Fig. 1     ein vereinfachtes Anlagengesamtfließbild mit der erfindungsgemäßen Reinigungsstufe,

Fig. 2     als Blockfließbild die erfindungsgemäße Reinigungsstufe sowie in einer

EP 0 628 519 B1

Tabelle die Prozeßparameter.

In der folgenden Beschreibung sind Ströme angegeben, wobei es sich um in Leitungen fließende Gase, Dämpfe oder Flüssigkeiten oder deren Gemische handeln kann, die auch in der Tabelle angegeben sind, zuzüglich zu Druck- und Temperaturangaben.

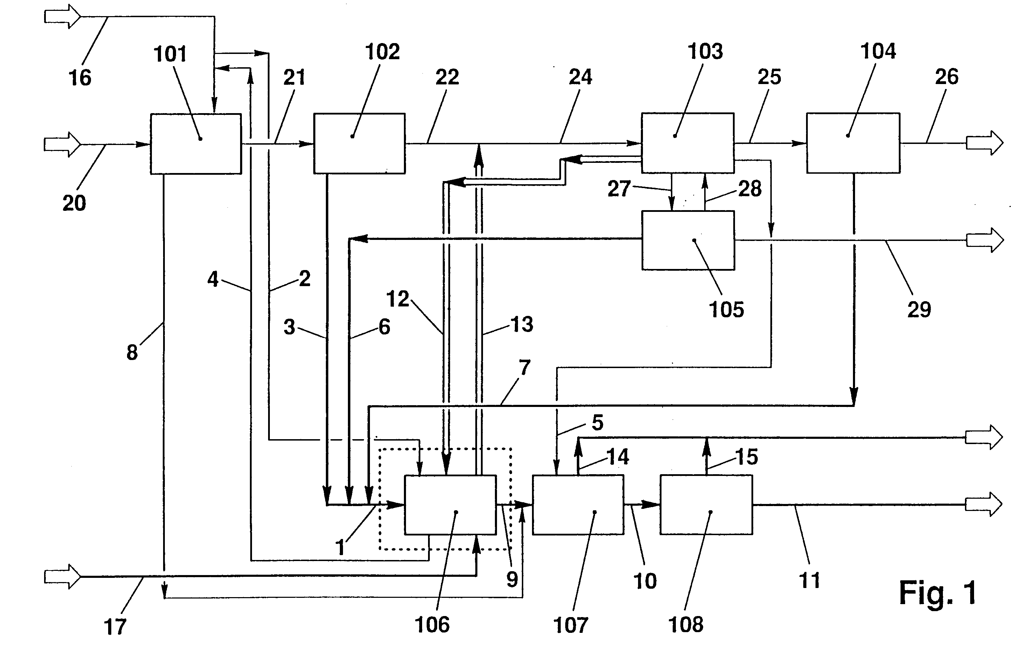

In Fig. 1 ist punktiert umrahmt der wesentliche Anlageteil, um den es hier geht, mit 106 bezeichnet. Diese Reinigungsanlage 106 ist ein integraler Bestandteil einer Anlage zur Behandlung eines über eine Rohgaszuführung 20 eingebrachten Rohgases aus einer partiellen Oxidation von kohlenstoffhaltigen Stoffen.

Dieses Rohgas 20 wird, wie aus Fig. 1 erkennbar, einer mit Wasser betriebenen Rohgaswäsche 101 zugeführt, verläßt als gewaschenes Prozeßgas 21 die Wäsche und wird einer Prozeßgaskühlung 102 zugeführt und verläßt diese als gekühltes Prozeßgas 22. Durch Beaufschlagung mit Sauergas 13 aus der weiter unten näher beschriebenen Sauergasabtrennung bzw. -reinigung 106 ergibt sich ein saurer Prozeßgasstrom 24, der einer Entschwefelung 103 zugeführt wird. Dieser entschwefelte Prozeßgasstrom 25 wird in einer Reingasbefeuchtung 104 befeuchtet und verläßt die Anlage als Reingas 26.

Erkennbar fallen in einigen Behandlungsstufen Kondensate bzw. Abwässer an. So in wesentlicher Menge in der Prozeßgaskühlung 102, hier ergibt sich der Prozeßkondensatstrom 3, in einer der Entschwefelungsstufe 103 zugeordneten Schwefelgewinnung 105 sowie in der Reingasbefeuchtungsstufe 104, die jeweiligen Ströme sind als Prozeßabwasser 6 bzw. Abschlämmwasser 7 bezeichnet.

Alle diese Abwässer treten zusammengefaßt als allgemein mit Prozeßkondensat-Abwasserstrom 1 bezeichnet in die Sauergasabtrennung bzw. -reinigung 106 ein.

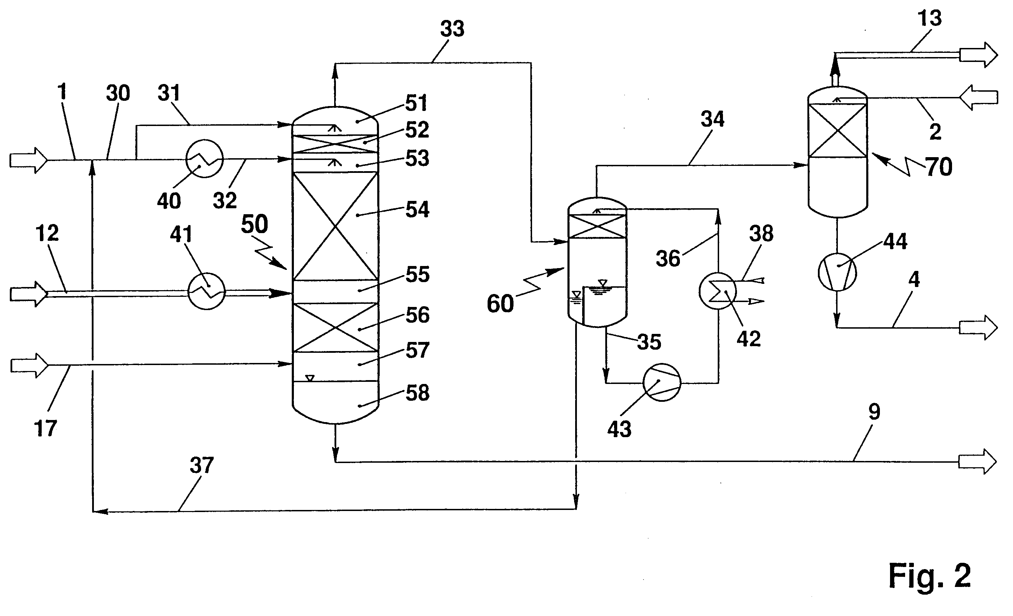

Wie sich aus Fig. 2 ergibt, wird der Abwasserstrom 1 einem Abstreifturm 50 zugeführt, der, in der Figur von oben nach unten, über eine Rückflußaufgabezone 51, eine Verstärkungszone 52, eine Speisezone 53, eine Abtriebszone 54, eine Strippgasaufgabezone 55, eine Aufwärmzone 56, eine Dampfaufgabezone 57 sowie über eine Sumpfzone 58 mit einem Stripperablauf 9 verfügt.

Dem Abstreifturm 50 wird über einen Prozeßkondensat - Vorwärmer 40 - über den Abwasserhauptvorlauf 32 das Abwasser zugeführt, wobei zusätzlich ein Abwassernebenvorlauf 31 vorgesehen ist. Das notwendige Strippgas wird über die Leitung 12 und einem zwischengeschalteten Strippgasvorwärmer 41 der Strippgasaufwärmezone 55 zugeführt, wobei die Dampfbeaufschlagung das Bezugszeichen 17 trägt.

Im Abstreifturm 50 wird das aufgegebene Prozeßkondensatabwasser von oben her von oben nach unten verrieselt und in der Sumpfzone 58 des Abstreifturmes gesammelt und als Stripperablauf 9 an die nachgeschaltete Oxidation 107 abgeführt.

Das Strippgas und Dampf werden im unteren Bereich des Abstreifturmes 50 aufgegeben und im Gegenstrom zum herabrieselnden Prozeßkondensatabwasser geführt und bewirken den Wärme- und Stoffaustausch im Abstreifturm. Dabei werden die gebildeten Stripperbrüden als Kopfprodukt des Abstreifturmes abgezogen.

Zwecks Einstellung der Wärme- und Stoffaustauschbedindungen im Abstreifturm wird aus dem Prozeßkondensatabwasservorlauf 30 ein Prozeßkondensatabwasser-Nebenvorlauf 31 und ein Prozeßkondensatabwasser-Hauptvorlauf 32 gebildet. Der Prozeßkondensatabwasser-Nebenvorlauf 31 wird in die Rückflußaufgabezone 51 verrieselt und fällt in die Verstärkungszone 52. Der Prozeßkondensatabwasser-Hauptvorlauf wird in die Speisezone 53 verrieselt und fällt in die Abtriebszone 54. Das Strippgas wird in die Strippgasaufgabezone eingespeist und steigt in die Abtriebszone 54 auf. Der Dampf wird in die Dampfaufgabezone 57 eingespeist und steigt in die Aufwärmezone 56 auf.

Die am Kopf des Abstreifturmes 50 abgezogenen Stripperbrüden als Gemisch setzen sich zusammen aus dem gesamten Strippgas, wenigstens einem Teil des eingespeisten Dampfes und aus den aus dem Prozeßkondensatabwasservorlauf abgetriebenen Gasen, wobei als Strippgas ein Gas oder ein Gasgemisch, das mindestens 50 % $CO_2$-Gas anteilig enthält, eingesetzt wird.

Das Strippgas 12 wird als $CO_2$-haltiges Gas aus der Entschwefelungsstufe 103 zur Verfügung gestellt. Die entstehenden Stripperbrüden werden als Strom 33 einem Quenchkühler 60 zugeführt, in dem über die Leitung 36 unter Zwischenschaltung eines Kühlers 42 und einer Pumpe 43 Wasser im Kreislauf geführt ist. Der insbesondere durch Kondensation entstehende Überlauf bzw. Ablauf wird über die Leitung 35 bzw. den Quenchkühlerrückfluß 37 dem Abwasserstrom 1 wieder zugeführt, während aus dem Dampfdom des Quenchkühlers 16 die Quenchkühlerbrüden 34 einem Wäscher 70 zugeführt werden. Der Wäscher 70 ist mit einem Waschwasservorlauf 2 ausgerüstet und mit einem von einer Sumpfpumpe 44 beaufschlagten Waschwasserrücklauf 4, der, wie sich aus Fig. 1 ergibt, den Waschwasserstrom 16 zur Beaufschlagung des Rohgaswäschers 101 zugegeben wird. Das den Wäscher 70 verlassende Sauergas 13 wird, wie eingangs schon erwähnt, dem Prozeßgas zum Strom 24 zugeführt. Die Ströme 12 und 13 sind in den Figuren als Doppellinie dargestellt.

Erkennbar verlassen die Abwasserreinigung 106 nur der Waschwasserrücklauf 4 zum Rohgaswäscher 101, die Sauergasrückführung 13 zum Prozeßgasstrom 24 und der Stripperablauf 9, wobei es sich um praktisch salzbildnerfreies, ammoniakhaltiges Wasser handelt.

Dieses ammoniakhaltige Wasser wird einer Oxidationsstufe 107 und über den Oxidationsablauf 10 einer Ammoniak-Abtrennungsstufe 108 zugeführt, die einen gereinigten Abwasserstrom 11 abgibt. Der Oxidationsstufe 107 und der Ammoniakabtrennung 108 wird ein Abluftstrom 14 bzw. Ammoniakboden 15 entnommen, die einer weiteren Behandlung zugeführt werden können.

Die weiteren, ggf. vorhandenen Ströme sind der nachfolgenden Bezugszeichen-Aufstellung zu entnehmen:

1 Prozeßkondensatabwasser
2 Waschwasservorlauf
3 Prozeßkondensat
4 Waschwasserrücklauf
5 HCN-Abwasser
6 Prozeßabwasser
7 Abschlämmwasser
8 Chlorid-Abwasser
9 Stripperablauf
10 Oxidationsablauf
11 Abwasser
12 Strippgas
13 Sauergas
14 Abluft
15 Ammoniak-Brüden
16 Waschwasser
17 Dampf
18
19
20 Prozeßrohgas
21 gewaschenes Prozeßgas
22 gekühltes Prozeßgas
23
24 saures Prozeßgas
25 entschwefeltes Prozeßgas
26 Prozeßreingas
27 Claus-Gas
28 Rückführgas
29 Schwefel
30 Prozeßkondensatabwasservorlauf
31 Prozeßkondensatabwasser-Nebenvorlauf
32 Prozßkondensatabwasser-Hauptvorlauf
33 Stripperbrüden
34 Quenchkühlerbrüden
35 Quenchkühlerablauf
36 Quenchkühlervorlauf
37 Quenchkühlerrückfluß
38 Kühlwasser
40 Prozeßkondensat-Hauptvorlauf-Vorwärmer
41 Strippgasvorwärmer
42 Kühler
43 Umlaufpumpe
44 Sumpfpumpe
50 Abstreifturm
51 Rückflußaufgabezone
52 Verstärkungszone
53 Speisezone
54 Abtriebszone
55 Strippgasaufgabezone
56 Aufwärmzone
57 Dampfaufgabezone
58 Sumpfzone
60 Quenchkühler
70 Wäscher

101 Rohgaswäsche
102 Prozeßgaskühlung
103 Entschwefelung
104 Reingasbefeuchtung
105 Schwefelgewinnung
106 Sauergasabtrennung
107 Oxidation
108 Ammoniakabtrennung

Tabelle 1    Blatt 1 v. 2

| Bezugszeichen aus Fig. | | | 1 | 2 | 3 | 4 | 6 | 7 | 9 | 12 | 13 | 17 |
|---|---|---|---|---|---|---|---|---|---|---|---|---|
| | | | | | | | | | | | | |
| Komponente | Mol. Gew. | | | | | | | | | | | |
| CO | 28,010 | kg/h | 1,82 | | 1,58 | | | 0,24 | | 13,33 | 15,15 | |
| H2 | 2,016 | kg/h | 0,09 | | 0,08 | | | 0,01 | | 1,42 | 1,51 | |
| CO2 | 44,010 | kg/h | 2110,11 | | 2105,72 | 224,21 | 1,67 | 2,72 | 56,68 | 2578,97 | 4408,19 | |
| CH4 | 16,043 | kg/h | 0,10 | | 0,09 | | | 0,01 | | 11,71 | 11,81 | |
| N2 | 28,013 | kg/h | 2,51 | | 2,17 | 0,02 | | 0,34 | | 177,61 | 180,10 | |
| AR | 39,948 | kg/h | 0,04 | | 0,03 | | | 0,01 | | 4,79 | 4,83 | |
| H2S | 34,076 | kg/h | 25,44 | | 24,55 | 2,45 | 0,89 | | 0,80 | 0,23 | 22,42 | |
| COS | 60,070 | kg/h | | | | | | | | 0,40 | 0,40 | |
| NH3 | 17,030 | kg/h | 862,20 | | 860,38 | 101,80 | 1,82 | | 759,92 | | 0,48 | |
| HCN | 27,026 | kg/h | 3,16 | | 3,16 | 0,75 | | | 1,85 | | 0,56 | |
| C6H6 | 78,113 | kg/h | 9,01 | | 9,01 | 0,42 | | | | | 8,67 | |
| H2O | 18,015 | kg/h | 14677,12 | 5500 | 11932,06 | 5444,13 | 297,97 | 2447,09 | 22124,37 | 5,58 | 113,20 | 7500 |
| | | | | | | | | | | | | |
| Durchfluß | | kg/h | 17691 | 5500 | 14939 | 5774 | 302 | 2450 | 22944 | 2794 | 4767 | 7500 |
| Arbeitsdruck (absolut) | | bar | 20,0 | 6,0 | 20,0 | 33,0 | 7,0 | 21,5 | 4,8 | 23,5 | 3,5 | 6,0 |
| Arbeitstemperatur | | C | 60 | 65 | 46 | 80 | 40 | 73 | 145 | 40 | 75 | 180 |

EP 0 628 519 B1

Tabelle 1    Blatt 2 v. 2

| Bezugszeichen aus Fig. | | | 20 | 30 | 31 | 32 | 33 | 34 | 35 | 36 | 37 | |
|---|---|---|---|---|---|---|---|---|---|---|---|---|
| | | | | | | | | | | | | |
| Komponente | Mol. Gew. | | | | | | | | | | | |
| CO | 28,010 | kg/h | 112400 | 1,82 | 0,18 | 1,64 | 15,15 | 15,15 | | | | |
| H2 | 2,016 | kg/h | 6100 | 0,09 | 0,01 | 0,08 | 1,51 | 1,51 | | | | |
| CO2 | 44,010 | kg/h | 78200 | 2324,13 | 232,41 | 2091,72 | 4846,42 | 4632,40 | 3276,53 | 3062,51 | 214,02 | |
| CH4 | 16,043 | kg/h | 5500 | 0,10 | 0,01 | 0,09 | 11,81 | 11,81 | | | | |
| N2 | 28,013 | kg/h | 265885 | 2,52 | 0,25 | 2,27 | 180,13 | 180,12 | 0,15 | 0,14 | 0,01 | |
| AR | 39,948 | kg/h | in N2 | 0,04 | 0,00 | 0,04 | 4,83 | 4,83 | | | | |
| H2S | 34,076 | kg/h | 1080 | 26,52 | 2,65 | 23,87 | 25,95 | 24,87 | 16,53 | 14,45 | 1,08 | |
| COS | 60,070 | kg/h | in H2S | | | | 0,40 | 0,40 | | | | |
| NH3 | 17,030 | kg/h | 835 | 974,01 | 97,40 | 876,61 | 214,89 | 102,28 | 1711,75 | 1599,94 | 111,81 | |
| HCN | 27,026 | kg/h | Spuren | 4,04 | 0,40 | 3,64 | 2,19 | 1,31 | 13,47 | 12,59 | 0,88 | |
| C6H6 | 78,113 | kg/h | 1800 | 13,15 | 1,32 | 11,84 | 13,15 | 9,09 | 62,16 | 58,10 | 4,06 | |
| H2O | 18,015 | kg/h | 30000 | 15349,97 | 1535,00 | 13814,97 | 731,18 | 57,33 | 10300,97 | 9628,12 | 673,85 | |
| | | | | | | | | | | | | |
| Durchfluß | | kg/h | 500000 | 18696 | 1870 | 16826 | 6047 | 5041 | 15382 | 14376 | 1006 | |
| Arbeitsdruck (absolut) | | bar | 26 | 5,0 | 5,0 | 5,0 | 4,5 | 4,3 | 4,3 | 4,4 | 6 | |
| Arbeitstemperatur | | C | 290 | 60 | 60 | 100 | 102 | 75 | 75 | 45 | 75 | |

**Patentansprüche**

1.  Verfahren zur Reinigung von alkalischem Prozeßkondensat-Abwasser aus einer partiellen Oxidation von kohlenstoffhaltigen Brennstoffen, wobei das zu reinigende Abwasser bei einer Prozeßgaskühlung, in einer Entschwefelungsstufe und/oder in einer Reingasbefeuchtungsstufe anfällt,
    dadurch gekennzeichnet,
    daß der Abwasserstrom mit einem Strippgas angesäuert wird, dessen Hauptbestandteil $CO_2$ darstellt und anschließend mittels eines Dampfstromes derart beaufschlagt wird, daß dieser Reinigungsstufe ammoniak($NH_3$)-haltiges, bis auf Spuren salzbildnerfreies Wasser entnommen wird, wobei das diese Reinigungsstufe verlassende, noch $NH_3$ enthaltende Sauergas einer weiteren Behandlung zugeführt wird.

2.  Verfahren nach Anspruch 1,
    dadurch gekennzeichnet,
    daß das $CO_2$-haltige Gas einer Entschwefelungsstufe entnommen wird.

3.  Verfahren nach Anspruch 1 oder 2,
    dadurch gekennzeichnet,
    daß als Strippgas ein Gas von über 50 Vol.-% $CO_2$ eingesetzt wird.

4.  Verfahren nach Anspruch 1, 2 oder 3,
    dadurch gekennzeichnet,
    daß das Sauergas aus der ersten Reinigungsstufe in einem wasserbeaufschlagten Quenchkühler behandelt wird.

5.  Verfahren nach Anspruch 4,
    dadurch gekennzeichnet,
    daß das Wasser des Quenchkühlers in einem geschlossenen Kreislauf geführt wird, wobei der Abfluß dem Abwasserstrom vor der ersten Reinigungsstufe zugeführt wird.

6.  Verfahren nach einem der vorangehenden Ansprüche,
    dadurch gekennzeichnet,
    daß die den Quenchkühler verlassenden Brüden einem Rest-Wäscher zugeführt werden, wobei das diesen Wäscher verlassende Waschwasser dem Prozeßwaschwasserstrom zugeführt wird, und wobei das diesen Rest-Wäscher verlassende Sauergas dem Prozeßgasstrom hinter der Prozeßgaskühlung vor der Entschwefelung zugeführt wird.

7.  Verfahren nach Anspruch 1 oder einem der folgenden,
    dadurch gekennzeichnet,
    daß das die erste Reinigungsstufe verlassende ammoniakhaltige, aber salzbildnerfreie Abwasser weiteren Behandlungsstufen, insbesondere einer Oxidations- und einer Ammoniakabtrennungsstufe zugeführt wird.

**Claims**

1.  A process for the purification of alkaline process condensate waste water from partial oxidation of carbonaceous fuels, wherein the waste water to be purified is produced upon process gas cooling, in a desulphurisation stage and/or in a pure gas wetting stage, characterised in that the waste water flow is acidified with a stripping gas whose main constituent is represented by $CO_2$ and is then acted upon by means of a steam flow in such a way that ammonia ($NH_3$)-bearing water which is free of salt-forming agent except for traces is taken from this purification stage, wherein the acid gas which leaves said purification stage and which still contains $NH_3$ is fed to a further treatment.

2.  A process according to claim 1 characterised in that the $CO_2$-bearing gas is taken from a desulphurisation stage.

3.  A process according to claim 1 or claim 2 characterised in that a gas of over 50% by volume $CO_2$ is used as the stripping gas.

4.  A process according to claim 1, claim 2 or claim 3 characterised in that the acid gas from the first purification stage is treated in a water-operated quench cooler.

5.  A process according to claim 4 characterised in that the water of the quench cooler is passed in a closed circuit, wherein the discharge flow is fed to the waste water flow upstream of the first purification stage.

6. A process according to one of the preceding claims characterised in that the vapours leaving the quench cooler are fed to a residue washer, wherein the washing water leaving said washer are fed to the process washing water flow and wherein the acid gas leaving said residue washer is fed to the process gas flow downstream of the process gas cooling step prior to the desulphurisation step.

7. A process according to claim 1 or one of the following claims characterised in that the waste water leaving the first purification stage, which is ammonia-bearing but free from salt-forming agent, is fed to further treatment stages, in particular an oxidation stage and an ammonia-separation stage.

**Revendications**

1. Procédé pour l'épuration des eaux usées de condensation alcalines industrielles à partir d'une oxydation partielle de combustibles contenant du carbone, les eaux usées à purifier étant produites au cours du refroidissement de gaz industriels, dans une étape de désulfuration et/ou dans une étape d'humidification de gaz pur, caractérisé en ce que le courant des eaux usées est acidifié avec un gaz de stripage dont le $CO_2$ représente le composant principal et qui est consécutivement balayé par un courant de vapeur de telle sorte que lors de cette étape d'épuration, on prélève de l'eau contenant de l'ammoniac ($NH_3$) et qui est exempte d'halogène mis à part des traces, à la sortie de cette étape d'épuration, le gaz acidifié contenant encore du $NH_3$ est amené à un traitement ultérieur.

2. Procédé selon la revendication 1,
   caractérisé en ce que
   le gaz à teneur de $CO_2$ est prélevé d'une étape de désulfuration.

3. Procédé selon la revendication 1 ou 2,
   caractérisé en ce qu'
   en tant que gaz de stripage, on utilise un gaz avec plus de 50 % en volume de $CO_2$.

4. Procédé selon la revendication 1, 2 ou 3,
   caractérisé en ce que
   le gaz acidifié est traité à partir de la première étape de purification dans un refroidisseur à injection balayé par un courant d'eau.

5. Procédé selon la revendication 4,
   caractérisé en ce que
   l'eau du refroidisseur à injection est amenée dans un circuit fermé, l'écoulement du courant des eaux usées étant amené avant la première étape de purification.

6. Procédé selon l'une des revendications précédentes, caractérisé en ce que
   les buées quittant le refroidisseur à injection sont amenées à un dispositif de nettoyage résiduaire, à la sortie de ce dispositif de nettoyage, les eaux nettoyées sont amenées à un courant d'eau de lavage industriel et le gaz acidifié quittant ce dispositif de nettoyage résiduaire étant amené au courant de gaz industriels derrière le refroidissement des gaz industriels avant la désulfuration.

7. Procédé selon la revendication 1 ou l'une des revendications suivantes,
   caractérisé en ce que
   les eaux usées contenant de l'ammoniac mais pratiquement exemptes d'halogène quittant la première étape d'épuration sont amenées à d'autres étapes de traitement, en particulier à une étape d'oxydation et à une étape de séparation de l'ammoniac.

Fig. 1

EP 0 628 519 B1

Fig. 2

EP 0 628 519 B1